Europäisches Patentamt

European Patent Office

Office européen des brevets

(19)

(11) Veröffentlichungsnummer: **0 401 776 B1**

# EUROPÄISCHE PATENTSCHRIFT

(12)

(45) Veröffentlichungstag der Patentschrift: **23.02.94**

(51) Int. Cl.[5]: **C08F 10/00**, C08F 4/654

(21) Anmeldenummer: **90110675.7**

(22) Anmeldetag: **06.06.90**

(54) **Verfahren zur Herstellung eines poly-1-olefins.**

(30) Priorität: **08.06.89 DE 3918646**

(43) Veröffentlichungstag der Anmeldung:
**12.12.90 Patentblatt 90/50**

(45) Bekanntmachung des Hinweises auf die
Patenterteilung:
**23.02.94 Patentblatt 94/08**

(84) Benannte Vertragsstaaten:
**BE DE ES FR GB IT NL**

(56) Entgegenhaltungen:
**EP-A- 0 068 256**
**US-A- 4 447 587**

(73) Patentinhaber: **HOECHST AKTIENGESELL-
SCHAFT**

**D-65926 Frankfurt(DE)**

(72) Erfinder: **Lecht, Rainer, Dr.**
**Feldbergstrasse 78**
**D-6233 Kelkheim (Taunus)(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Die Erfindung bezieht sich auf ein Verfahren zur Herstellung eines Poly-1-olefins unter Verwendung eines Ziegler-Trägerkatalysators auf Basis Magnesiumalkoholat und $TiCl_4$.

Verfahren zur Herstellung von Poly-1-olefinen mit breiter Molmassenverteilung unter Verwendung von Ziegler-Trägerkatalysatoren auf Basis Magnesiumalkoholat und $TiCl_4$ sind Stand der Technik.

Bekannt ist ein derartiges Verfahren, bei welchem ein Katalysator verwendet wird, dessen Übergangsmetallkomponente durch Umsetzung eines Magnesiumalkoholats mit Titantetrachlorid bei einer Temperatur von 50 bis 100°C, Abtrennung und Wäsche des Feststoffes, Temperung des Feststoffes bei 110 bis 200°C unter Zusatz von $TiCl_4$ und gründliche Wäsche des Feststoffes hergestellt wurde (vgl. CA 1207499).

Bekannt ist weiterhin ein ähnliches Verfahren, in welchem das gleiche Umsetzungsprodukt von Magnesiumalkoholat und $TiCl_4$ eingesetzt wird, welches jedoch nicht unter Zusatz von $TiCl_4$, sondern ohne weitere Zugaben getempert wurde. Daran schloß sich ein gründliches Auswaschen an (vgl. US 4.447.587).

Beide bekannten Katalysatorsysteme haben den Nachteil, daß bei ihrer Herstellung große Mengen Waschlösungen anfallen, welche aufgearbeitet werden müssen. Außerdem ist die Herstellung zeitaufwendig.

Es bestand die Aufgabe, eine Möglichkeit zu finden, die bekannten Katalysatoren in kürzerer Zeit unter Ersparnis an Rohstoffen und Hilfsmitteln und unter Abfallvermeidung herzustellen.

Es wurde gefunden, daß die Aufgabe gelöst werden kann, wenn nach der ersten Reaktionsstufe nur ein Teil der im Feststoff enthaltenen löslichen Titanverbindungen entfernt wird und der Feststoff in einer titanarmen flüssigen Phase einer thermischen Behandlung unterzogen wird.

Die Erfindung betrifft somit ein Verfahren zur Herstellung eines Poly-1-olefins durch Polymerisation eines 1-Olefins der Formel $R^4CH=CH_2$, in der $R^4$ Wasserstoff oder einen Alkylrest mit 1 bis 10 Kohlenstoffatomen bedeutet, in Suspension oder in der Gasphase, bei einer Temperatur von 20 bis 200°C und einem Druck von 0,5 bis 50 bar, in Gegenwart eines Katalysators, der aus dem Umsetzungsprodukt eines Magnesiumalkoholats mit Titantetrachlorid (Komponente a) und einer metallorganischen Verbindung der Gruppe I bis III des Periodensystems (Komponente b) besteht, dadurch gekennzeichnet, daß man die Polymerisation in Gegenwart eines Katalysators durchführt, dessen Komponente a in der Weise hergestellt wurde, daß in einer ersten Reaktionsstufe ein Magnesiumalkoholat mit Titantetrachlorid in einem Kohlenwasserstoff bei einer Temperatur von 50 bis 100°C umgesetzt wurde, anschließend die löslichen Bestandteile teilweise abgetrennt wurden, und der erhaltene Feststoff in einer zweiten Reaktionsstufe bei einer Temperatur von 110 bis 200°C 8 bis 100 Stunden einer thermischen Behandlung unterworfen wurde.

Zur Herstellung der Komponente a wird ein Magnesiumalkoholat verwendet.

Dieses Magnesiumalkoholat kann ein "einfaches" Magnesiumalkoholat der Formel $Mg(OR^1)(OR^2)$ sein, in der $R^1$ und $R^2$ gleich oder verschieden sind und einen Alkylrest mit 1 bis 6 Kohlenstoffatomen bedeuten. Beispiele sind $Mg(OC_2H_5)_2$, $Mg(OiC_3H_7)_2$, $Mg(OnC_3H_7)_2$, $Mg(OnC_4H_9)_2$, $Mg(OCH_3)(OC_2H_5)$, $Mg(OC_2H_5)$-$(OnC_3H_7)$. Es kann auch ein "einfaches" Magnesiumalkoholat der Formel $Mg(OR)_nX_m$ verwendet werden, in der X = Halogen, $(SO_4)_{1/2}$, OH, $(CO_3)_{1/2}$, $(PO_4)_{1/3}$, Cl ist, R die oben genannte Bedeutung hat und n + m = 2 ist.

Es kann jedoch auch ein "komplexes" Magnesiumalkoholat eingesetzt werden.

Als "komplexes" Magnesiumalkoholat wird ein Magnesiumalkoholat bezeichnet, das neben Magnesium mindestens ein Metall der 1. bis 4. Hauptgruppe des Periodensystems enthält. Beispiele für ein derartiges komplexes Magnesiumalkolat sind:
$[Mg(OiC_3H_7)_4]Li_2$; $[Al_2(OiC_3H_7)_8]Mg$; $[Si(OC_2H_5)_6]Mg$; $[Mg(OC_2H_5)_3]Na$; $[Al_2(OiC_4H_9)_8]Mg$; $[Al_2(O-secC_4H_9)_6(OC_2H_5)_2]Mg$.

Die Herstellung der komplexen Magnesiumalkoholate (Alkoxosalze) erfolgt nach bekannten Methoden. Für die Herstellung des komplexen Magnesiumalkoholats seien folgende Beispiele genannt:

1. Man läßt zwei Metallalkoholate in einem geeigneten Lösemittel aufeinander einwirken, zum Beispiel

$$2Al(OR)_3 + Mg(OR)_2 \rightarrow [Al_2(OR)_8]Mg$$

2. Auflösen von Magnesium in einer alkoholischen Lösung eines Metallalkoholates

$$2LiOR + Mg + 2 ROH \rightarrow [Mg(OR)_4]Li_2 + H_2$$

3. Gleichzeitiges Auflösen zweier Metalle in Alkohol

$$8\ ROH\ +\ Mg\ +\ 2\ Al \rightarrow [Al_2(OR)_8]Mg\ +\ 4\ H_2$$

Bevorzugt verwendet werden die einfachen Magnesiumalkoholate, insbesondere $Mg(OC_2H_5)_2$, $Mg(OnC_3H_7)_2$ und $Mg(OiC_3H_7)_2$. Das Magnesiumalkoholat wird in reiner Form oder auf einem Träger fixiert eingesetzt.

Die Herstellung der Komponente a erfolgt in zwei Reaktionsstufen bei unterschiedlicher Temperatur.

In der ersten Reaktionsstufe wird das Magnesiumalkoholat mit Titantetrachlorid bei einer Temperatur von 50 bis 100°C, vorzugsweise von 60 bis 90°C, in Gegenwart eines inerten Kohlenwasserstoffs vorzugsweise unter Rühren umgesetzt. Auf 1 mol Magnesiumalkoholat werden 0,9 bis 5 mol Titantetrachlorid eingesetzt, vorzugsweise 1,4 bis 3,5 mol Titantetrachlorid auf 1 mol Magnesiumalkoholat.

Als inerter Kohlenwasserstoff eignet sich ein aliphatischer oder cycloaliphatischer Kohlenwasserstoff wie Butan, Pentan, Hexan, Heptan, Isooctan, Cyclohexan, Methylcyclohexan, sowie ein aromatischer Kohlenwasserstoff wie Toluol, Xylol; auch hydrierte Dieselöl- oder Benzininfraktionen, die sorgfältig von Sauerstoff, Schwefelverbindungen und Feuchtigkeit befreit worden sind, sind brauchbar.

Die Reaktionsdauer in der ersten Stufe beträgt 0,5 bis 8 Stunden, vorzugsweise 2 bis 6 Stunden.

In der ersten Reaktionsstufe findet ein weitgehender Austausch der Alkoxygruppen des Magnesiumalkoholats mit den Chloratomen des Titantetrachlorids statt. Als Reaktionsprodukt erhält man dabei einen kohlenwasserstoffunlöslichen magnesium- und titanhaltigen Feststoff und kohlenwasserstofflösliche Titanesterchloride.

Anschließend wird das in dem Kohlenwasserstoff unlösliche Reaktionsprodukt des Magnesiumalkoholats mit dem Titantetrachlorid teilweise von nicht umgesetzten, löslichen Titanverbindungen befreit. Dies kann durch Waschen mit einem inerten Kohlenwasserstoff geschehen. Auf diese Weise bleibt ein Teil der entstandenen Titanesterchloride im Feststoff zurück und gestattet, die Titanbelegung der Komponente a zu steuern. Alternativ kann das in dem Kohlenwasserstoff unlösliche Reaktionsprodukt auch gänzlich von dem die löslichen Titanverbindungen enthaltenden Suspensionsmittel befreit werden, z.B. durch Filtration. In diesem Fall wird die zur Einstellung der Titanbelegung in der Komponente a erforderliche Menge des Filtrats vor der Temperung zugegeben.

Der erhaltene Feststoff wird in einer zweiten Reaktionsstufe bei einer Temperatur von 100 bis 200°C, vorzugsweise 110 bis 160°C vorzugsweise unter Rühren einer thermischen Behandlung unterzogen. Die Reaktionsdauer beträgt 8 bis 100 Stunden. Bevorzugt sind 10 bis 40 Stunden. Dabei befindet sich der Feststoff in einer titanarmen flüssigen Phase. Nach dieser Temperung hat die feste Phase der Suspension den gewünschten Titangehalt und die flüssige Phase der anfallenden Suspension ist hinreichend an titanhaltigen Verbindungen verarmt. Eine Katalysatorwäsche ist nicht notwendig.

Man erhält einen im Kohlenwasserstoff unlöslichen, magnesium- und titanhaltigen Feststoff, der als Komponente a bezeichnet wird.

Die Herstellung des erfindungsgemäß zu verwendenden Polymerisationskatalysators erfolgt durch Zusammenbringen der Komponente a und einer metallorganischen Verbindung der Gruppe I bis III des Periodensystems (Komponente b).

Die Komponente a kann als Suspension direkt mit der Komponente b umgesetzt werden; sie kann jedoch zunächst als Feststoff isoliert, gelagert und zur späteren Weiterverwendung wieder suspendiert werden.

Vorzugsweise verwendet man als Komponente b aluminiumorganische Verbindungen. Als aluminiumorganische Verbindungen eignen sich chlorhaltige aluminiumorganische Verbindungen, die Dialkylaluminiummonochloride der Formel $R_2^3AlCl$ oder Alkylaluminiumsesquichloride der Formel $R_3^3Al_2Cl_3$, worin $R^3$ ein Alkylrest mit 1 bis 16 Kohlenstoffatomen ist. Als Beispiele seien genannt $(C_2H_5)_2AlCl$, $(iC_4H_9)_2AlCl$, $(C_2H_5)_3Al_2Cl_3$. Es können auch Gemische dieser Verbindungen eingesetzt werden.

Besonders bevorzugt werden als aluminiumorganische Verbindungen chlorfreie Verbindungen eingesetzt. Hierfür eignen sich einerseits die Umsetzungsprodukte von Aluminiumtrialkylen oder Aluminiumdialkylhydriden mit Kohlenwasserstoffresten mit 1 bis 6 Kohlenstoffatomen, vorzugsweise $Al(iC_4H_9)_3$ oder $Al(iC_4H_9)_2H$, mit 4 bis 20 Kohlenstoffatome enthaltenden Diolefinen, vorzugsweise Isopren. Beispielsweise sei Aluminiumisoprenyl genannt.

Andererseits eignen sich als solche chlorfreie aluminiumorganische Verbindungen Aluminiumtrialkyle $AlR_3^3$ oder Aluminiumdialkylhydride der Formel $AlR_2^3H$, in denen $R^3$ ein Alkylrest mit 1 bis 16 Kohlenstoffatomen bedeutet. Beispiele sind $Al(C_2H_5)_3$, $Al(C_2H_5)_2H$, $Al(C_3H_7)_3$, $Al(C_3H_7)_2H$, $Al(iC_4H_9)_3$, $Al(iC_4H_9)_2H$, $Al(C_8H_{17})_3$, $Al(C_{12}H_{25})_3$, $Al(C_2H_5)(C_{12}H_{25})_2$, $Al(iC_4H_9)(C_{12}H_{25})_2$.

Es können auch Mischungen von metallorganischen Verbindungen der I. bis III. Gruppe des Periodensystems, insbesondere Mischungen verschiedener aluminiumorganischer Verbindungen eingesetzt werden.

Beispielsweise seien folgende Mischungen genannt:

$Al(C_2H_5)_3$ und $Al(iC_4H_9)_3$, $Al(C_2H_5)_2Cl$ und $Al(C_8H_{17})_3$, $Al(C_2H_5)_3$ und $Al(C_8H_{17})_3$, $Al(C_4H_9)_2H$ und Al-

$(C_8H_{17})_3$, $Al(iC_4H_9)_3$ und $Al(C_8H_{17})_3$, $Al(C_2H_5)_3$ und $Al(C_{12}H_{25})_3$, $Al(iC_4H_9)_3$ und $Al(C_{12}H_{25})_3$, $Al(C_2H_5)_3$ und $Al(C_{16}H_{33})_3$, $Al(C_3H_7)_3$ und $Al(C_{18}H_{37})_2(iC_4H_9)$, $Al(C_2H_5)_3$ und Aluminiumisoprenyl (Umsetzungsprodukt von Isopren mit $Al(iC_4H_9)_3$ oder $Al(iC_4H_9)_2H$).

Das Mischen der Komponente a und der Komponente b kann vor der Polymerisation in einem Rührkessel bei einer Temperatur von -30°C bis 150°C, vorzugsweise -10 bis 120°C erfolgen. Es ist auch möglich, die beiden Komponenten direkt im Polymerisationskessel bei einer Polymerisationstemperatur von 20 bis 200°C zu vereinigen. Die Zugabe der Komponente b kann jedoch auch in zwei Schritten erfolgen, indem vor der Polymerisationsreaktion die Komponente a mit einem Teil der Komponente b bei einer Temperatur von -30°C bis 150°C voraktiviert wird und die weitere Zugabe der Komponente b in dem Polymerisationsreaktor bei einer Temperatur von 20 bis 200°C erfolgt.

Der erfindungsgemäß zu verwendende Polymerisationskatalysator wird zur Polymerisation von 1-Olefinen der Formel $R^4CH=CH_2$, in der $R^4$ ein Wasserstoffatom oder einen Alkylrest mit 1 bis 10 C-Atomen bedeutet, eingesetzt, beispielsweise Ethylen, Propylen, Buten-(1), Hexen-(1), 4-Methylpenten-(1), Octen-(1).

Vorzugsweise wird Ethylen allein oder als Gemisch von mindestens 70 Gew.-% Ethylen und maximal 30 Gew.-% eines anderen 1-Olefins der obigen Formel polymerisiert.

Insbesondere wird Ethylen allein oder ein Gemisch von mindestens 90 Gew.-% Ethylen und maximal 10 Gew.-% eines anderen 1-Olefins der obigen Formel polymerisiert.

Die Polymerisation wird in bekannter Weise in Lösung, in Suspension oder in der Gasphase, kontinuierlich oder diskontinuierlich, ein- oder mehrstufig bei einer Temperatur von 20 bis 200°C, vorzugsweise 50 bis 150°C, durchgeführt. Der Druck beträgt 0,5 bis 50 bar. Bevorzugt ist die Polymerisation in dem technisch besonders interessanten Druckbereich von 5 bis 30 bar.

Dabei wird die Komponente a in einer Konzentration, bezogen auf Titan, von 0,0001 bis 1, vorzugsweise 0,001 bis 0,5 mmol Ti pro $dm^3$ Dispergiermittel bzw. pro $dm^3$ Reaktorvolumen angewendet. Die metallorganische Verbindung wird in einer Konzentration von 0,1 bis 5 mmol, vorzugsweise 0,5 bis 4 mmol pro $dm^3$ Dispergiermittel bzw. pro $dm^3$ Reaktorvolumen verwendet. Prinzipiell sind aber auch höhere Konzentrationen möglich.

Die Suspensionspolymerisation wird in einem für das Ziegler-Niederdruckverfahren gebräuchlichen inerten Dispergiermittel durchgeführt, beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin können Benzin- bzw. hydrierte Dieselölfraktionen, die sorgfältig von Sauerstoff, Schwefelverbindungen und Feuchtigkeit befreit worden sind, benutzt werden.

Die Gasphasenpolymerisation kann direkt oder nach Vorpolymerisation des Katalysators in einem Suspensionsverfahren durchgeführt werden.

Die Molmasse des Polymerisats wird in bekannter Weise geregelt; vorzugsweise wird dazu Wasserstoff verwendet.

Das erfindungsgemäße Verfahren ergibt infolge der hohen Aktivität des zu verwendenden Katalysators Polymerisate mit sehr geringem Titan- und Halogengehalt und daher äußerst guten Werten im Farbbeständigkeits- und Korrosionstest. Ferner ermöglicht es die Herstellung von Polymerisaten mit sehr breiter Molmassenverteilung (Polydispersität); die $M_w/M_n$-Werte der Polymerisate liegen über 10.

Ein weiterer entscheidender Vorteil des erfindungsgemäßen Verfahrens ist darin zu sehen, daß es die Herstellung von Polymerisaten mit extrem unterschiedlichen Molmassen allein durch unterschiedliche Wasserstoffkonzentrationen ermöglicht. Beispielsweise entstehen bei der Polymerisation ohne Wasserstoff Polymerisate mit Molmassen über 2 Millionen und bei Wasserstoffgehalten von 70 Vol.-% im Gasraum Polymerisate mit Molmassen im Bereich von 30 000.

Die Polymerisate lassen sich nach dem Extrusions- und Extrusionsblasverfahren zu Hohlkörpern, Rohren, Kabeln und Folien mit glatten Oberflächen bei hohen Durchsatzleistungen verarbeiten.

Aufgrund eines besonderen strukturellen Aufbaues zeichnen sich die aus den erfindungsgemäß erhaltenen Polyolefinen hergestellten Hohlkörper und Flaschen durch eine hohe Unempfindlichkeit gegen Spannungsrißbildung aus.

Weiterhin ermöglicht das erfindungsgemäße Verfahren bei der Suspensions- und Gasphasenpolymerisation die Herstellung von rieselfähigen Polymerisatpulvern mit hohen Schüttdichten, so daß eine direkte Weiterverarbeitung zu Formkörpern ohne Granulierschritt erfolgen kann.

Schließlich fallen beim erfindungsgemäßen Verfahren 70 % des Zeitaufwandes für die Katalysatorherstellung und 70 % des Anfalles titanhaltiger Kohlenwasserstofflösungen fort. Außerdem werden 12 % des nach dem herkömmlichen Verfahren einzusetzenden teuren Titantetrachlorids eingespart.

Die nachfolgenden Beispiele sollen die Erfindung erläutern.

EP 0 401 776 B1

Bei den Beispielen wurde zur Kontaktherstellung und zur Polymerisation eine hydrierte Dieselölfraktion mit einem Siedebereich von 130 bis 170 °C verwendet.

Der Titangehalt der Katalysatoren wurde kolorimetrisch bestimmt (Lit. G.O. Müller, "Praktikum der quantitativen chemischen Analyse", 4. Aufl. (1957) S. 243).

Der Schmelzindex MFI wurde nach DIN 53 735 (E) bestimmt.

Die $M_w/M_n$-Werte wurden aus den Fraktionierdaten eines Gelpermeationschromatographen in o-Dichlorbenzol [ODCB] als Löse- und Elutionsmittel bei 135 °C ermittelt.

Die Viskosität VZ wurde nach DIN 53 728 Blatt 4 mit einem Ubbelohde-Viskosimeter in Dekahydronaphthalin als Lösemittel bestimmt.

Die Bestimmung der Dichte erfolgte nach DIN 53 479, die der Schüttdichte nach DIN 53 468.

## Beispiel 1

### a) Herstellung der Komponente a

114,3 g Magnesiumethylat wurden in einem 2 $dm^3$ Vierhalskolben mit Tropftrichter, Rührer, Rückflußkühler und Thermometer in 1 $dm^3$ einer Dieselölfraktion unter $N_2$-Überlagerung dispergiert. Zu dieser Dispersion wurden innerhalb von 5,5 h 332 g $TiCl_4$ zugetropft. Nach Absitzen des Feststoffs wurden bei 60 °C 0,5 $dm^3$ der überstehenden Lösung abgenommen und 1,1 $dm^3$ frisches Dispergiermittel zugegeben. Nachdem insgesamt viermal 1,1 $dm^3$ Dispergiermittel aufgefüllt und jeweils wieder 1,1 $dm^3$ überstehende Lösung abgenommen wurde, wurde mit 0,5 $dm^3$ Dispergiermittel aufgefüllt und die Suspension bei 125 °C 16 h gerührt. Die überstehende Lösung enthielt jetzt weniger als 10 mmol Ti pro $dm^3$. Der Feststoff (Komponente a) besaß die analytische Zusammensetzung:
Ti 6,2 Gew.-%
Mg 70,8 Gew.-%
Cl 23,0 Gew.-%

### b) Voraktivierung der Komponente a

30 g der Komponente a wurden mit Dieselöl auf 0,150 $dm^3$ Suspension aufgefüllt und mit 36 $cm^3$ einer 1-molaren Triethylaluminium-Lösung versetzt. Die Mischung wurde 2 h bei 120 °C gerührt. Danach waren 85 % des Titan (IV) zu Titan (III) reduziert.

### c) Ethylenpolymerisation in Suspension

In einen 1,5 $dm^3$ Stahlautoklaven wurden 0,75 $dm^3$ Kohlenwasserstoff, 5 mmol Aluminiumisoprenyl und 0,8 mg der Komponente a gegeben. Anschließend wurden bei einer Polymerisationstemperatur von 85 °C 3,2 bar $H_2$ und 3,9 bar Ethylen aufgepreßt. Das Ethylen wurde in dem Maße nachdosiert, daß der Gesamtdruck aufrechterhalten wurde. Nach 2 h wurde der Versuch abgebrochen. Das Polymerisat wurde durch Filtration abgetrennt und im Vakuumtrockenschrank getrocknet. Es wurden 147 g Polymerisat erhalten. Dies entsprach einer Katalysatorzeitausbeute von 9,8 kg PE/mmol Ti•h. Das Polymere besaß einen Schmelzindex MFI 190/5 von 2,5 g/10 min und ein Schmelzindexverhältnis MFI 190/21,6 zu MFI 190/5 von 12,3. Das Verhältnis $M_w/M_n$ aus der GPC betrug 9,7.

## Beispiel 2

In einen 150 $dm^3$ Kessel wurden 100 $dm^3$ einer Dieselölfraktion, 50 mmol Aluminiumtriethyl und 8 g der nach Beispiel 1 b behandelten Komponente a gegeben. Anschließend wurden bei einer Temperatur von 85 °C 0,6 $m^3$ Ethylen pro h und soviel $H_2$ eingeleitet, daß die $H_2$-Konzentration 75 Vol.-% betrug. Gleichzeitig wurden 0,2 $dm^3$ 1-Buten zudosiert. Nach 2,5 h wurde die Polymerisation bei einem Druck von 8 bar durch Entspannen unterbrochen. In einer zweiten Reaktionsphase wurden 0,7 $m^3$ Ethylen/h und soviel $H_2$ eingeleitet, daß die $H_2$-Konzentration 2 % betrug.

Dabei wurde 1 $dm^3$ 1-Buten zudosiert. Nach 3 h wurde die Polymerisation abgebrochen. Die Suspension wurde filtriert und das Polymerisat durch Überleiten von heißem Stickstoff getrocknet. Man erhielt 31 kg Produkt.

Das Polyethylenpulver hatte eine VZ von 290 $cm^3$/g. Die Dichte betrug 0,945 $g/cm^3$. Bei einem MFI 190/5 von 0,6 g/10 min betrug das Verhältnis MFI 190/21,6/MFI 190/5 22.

5

**Beispiel 3**

Die Komponente a wurde wie in Beispiel 1 a hergestellt und vom Suspensionsmittel befreit. Dieser lagerfähige Feststoff wurde in einem Kohlenwasserstoff suspendiert und wie in Beispiel 1 b behandelt. Durch Polymerisation, wie in Beispiel 1 c beschrieben, erhielt man 149 g Polymerisat. Dies entsprach einer Katalysatorzeitausbeute von 9,9 kg PE/mmol Ti•h. Das Polymere besaß einen Schmelzindex MFI 190/5 von 5,2 g/10 min und ein Schmelzindexverhältnis MFI 190/21,6 zu MFI 190/5 von 11,0.

**Vergleichsbeispiel**

114,3 g Magnesiumethylat wurden in einem 2 dm$^3$-Vierhalskolben mit Tropftrichter, Rührer, Rückflußkühler und Thermometer in 1 dm$^3$ einer Dieselölfraktion unter $N_2$-Überlagerung dispergiert. Zu dieser Dispersion wurden innerhalb von 5,5 h 332 g $TiCl_4$ zugetropft. Das Suspensionsmittel wurde wiederholt ausgetauscht, bis die flüssige Phase kein Titan mehr enthielt. Es wurden 6 cm$^3$ $TiCl_4$ zugegeben, und die Suspension wurde bei 125°C gerührt. Nach 18 h betrug die Ti-Konzentration in der flüssigen Phase noch 28 mmol/dm$^3$, nach weiteren 4 h 27 mmol/dm$^3$ und nach insgesamt 60-stündiger Temperung immer noch 24 mmol/dm$^3$. Der Feststoff wurde noch einmal mit einem Kohlenwasserstoff gewaschen und dann, wie in Beispiel 1 beschrieben, vorbehandelt und polymerisiert.
Analytische Zusammensetzung des Katalysators:
Ti 5,3 Gew.-%
Mg 23,5 Gew.-%
Cl 71,2 Gew.-%
Bei der Polymerisation wurden 160 g Polyethylen erhalten. Das Polymere hatte bei einem MFI 190/5 von 3,1 g/10 min, ein Schmelzindexverhältnis von MFI 190/21,6 zu MFI 190/5 von 11.

**Beispiel 4**

In einen 150 dm$^3$ Kessel wurden 100 dm$^3$ einer Dieselölfraktion, 40 mmol Aluminiumtriethyl und 1,2 g der nach Beispiel 1 b behandelten Komponente a gegeben. Anschließend wurden bei einer Temperatur von 85°C 6,4 kg Ethylen/h und $H_2$ bis zu einer Konzentration von 36 Vol.-% eingeleitet. Nach 4 h wurde die Polymerisation bei einem Druck von 6,6 bar durch Entspannen beendet. Die Suspension wurde filtriert und das Polymerisat durch Überleiten von heißem Stickstoff getrocknet. Man erhielt 25,5 kg Produkt, entsprechend einer Katalysatorausbeute von 21 kg/g Katalysator. Das Polymere hatte bei einem MFI 190/5 von 0,8 g/10 min ein MFI 190/21,6 zu MFI 190/5-Verhältnis von 13.

**Beispiele 5 bis 7**

Die analog zu Beispiel 4 erhaltenen Copolymerisationsergebnisse mit Buten, Propen und Hexen als Comonomere sind in Tabelle 1 aufgeführt.

Tabelle 1

| Copolymerisate | | | | |
|---|---|---|---|---|
| | | P.-Zeit h | Ausbeute kg | MFI 190/5 g/10 min | MFI 190/21,6/ MFI 190/5 |
| Bsp. 5 | 170 cm$^3$ 1-Buten | 4 | 25,3 | 1,3 | 15 |
| Bsp. 6 | 260 cm$^3$ Propen | 3,75 | 23,6 | 1,7 | 17 |
| Bsp. 7 | 620 cm$^3$ 1-Hexen | 3,8 | 24,3 | 1,1 | 12 |

**Patentansprüche**

1. Verfahren zur Herstellung eines Poly-1-olefins durch Polymerisation eines 1-Olefins der Formel $R^4CH=CH_2$, in der $R^4$ Wasserstoff oder einen Alkylrest mit 1 bis 10 Kohlenstoffatomen bedeutet, in Suspension oder in der Gasphase, bei einer Temperatur von 20 bis 200°C und einem Druck von 0,5 bis 50 bar, in Gegenwart eines Katalysators, der aus dem Umsetzungsprodukt eines Magnesiumalkoholats mit Titantetrachlorid (Komponente a) und einer metallorganischen Verbindung der Gruppe I bis III des Periodensystems (Komponente b) besteht, dadurch gekennzeichnet, daß man die Polymerisation in Gegenwart eines Katalysators durchführt, dessen Komponente a in der Weise hergestellt wurde, daß in einer ersten Reaktionsstufe ein Magnesiumalkoholat mit Titantetrachlorid in einem Kohlenwasserstoff bei einer Temperatur von 50 bis 100°C umgesetzt wurde, wobei auf 1 mol Magnesiumalkoholat 0,9 bis 5 mol Titaniumtetrachlorid eingesetzt werden, anschließend die löslichen Bestandteile teilweise abgetrennt wurden, und der erhaltene Feststoff in einer zweiten Reaktionsstufe bei einer Temperatur von 110 bis 200°C 8 bis 100 Stunden einer thermischen Behandlung unterworfen wurde.

2. Verfahren nach Anspruch 1, dadurch gekennzeichnet, daß zur Herstellung der Komponente a in der ersten Reaktionsstufe ein Magnesiumalkoholat der Formel $Mg(OR)_2$, in der R gleiche oder verschiedene Alkylreste mit 1-6 Kohlenstoffatomen bedeutet, mit Titantetrachlorid in einem Kohlenwasserstoff bei einer Temperatur von 50-100°C umgesetzt wurde, anschließend die löslichen Bestandteile teilweise abgetrennt wurden und der erhaltene Feststoff in einer zweiten Reaktionsstufe bei einer Temperatur von 110-200°C 8 bis 100 Stunden einer thermischen Behandlung unterworfen wurde.

## Claims

1. A process for the manufacture of a poly-1-olefin by the polymerization of a 1-olefin of the formula $R^4 CH = CH_2$, in which $R^4$ is hydrogen or an alkyl radical having 1 to 10 carbon atoms, in suspension or in the gas phase, at a temperature of 20 to 200°C and a pressure of 0.5 to 50 bar, in the presence of a catalyst consisting of the reaction product of a magnesium alcoholate and titanium tetrachloride (component a) and a metal-organic compound of a metal from group I to III of the periodic table (component b), wherein the polymerization is carried out in the presence of a catalyst whose component a has been manufactured by reacting a magnesium alcoholate with titanium tetrachloride in a hydrocarbon at a temperature of 50 to 100°C, employing 0.9 to 5 mol of titanium tetrachloride per mole of magnesium alcoholate, in a first reaction step, and then separating off part of the soluble constituents and subjecting the resulting solid to a heat treatment at a temperature of 110 to 200°C for 8 to 100 hours, in a second reaction step.

2. The process as claimed in claim 1, wherein component a has been manufactured by reacting a magnesium alcoholate of the formula $Mg(OR)_2$, in which R is identical or different alkyl radicals having 1-6 carbon atoms, with titanium tetrachloride in a hydrocarbon at a temperature of 50-100°C, in the first reaction step, and then separating off part of the soluble constituents and subjecting the resulting solid to a heat treatment at a temperature of 110-200°C for 8 to 100 hours, in a second reaction step.

## Revendications

1. Procédé pour préparer une poly-1-oléfine par polymérisation d'une 1-oléfine de formule $R^4 CH = CH_2$ - (dans laquelle $R^4$ représente un atome d'hydrogène ou un reste alkyle ayant 1 à 10 atomes de carbone), en suspension ou en phase gazeuse, à une température de 20 à 200°C et sous une pression de 0,5 à 50 bars, en présence d'un catalyseur qui consiste en le produit de la réaction d'un alcoolate de magnésium avec du tétrachlorure de titane (constituant a) et un composé organo-métallique d'un élément du groupe I à III du Système ou Tableau Périodique (constituant b), procédé caractérisé en ce qu'on effectue la polymérisation en présence d'un catalyseur dont le constituant (a) a été préparé par réaction, dans une première étape de réaction, d'un alcoolate de magnésium avec du tétrachlorure de titane dans un hydrocarbure à une température de 50 à 100°C en utilisant pour une mole d'alcoolate de magnésium 0,9 à 5 moles de tétrachlorure de titane, puis séparation partielle des constituants solubles, et soumission dans une seconde étape de réaction, du solide ainsi obtenu à un traitement thermique de chauffage à une température de 110 à 200°C durant 8 à 100 heures.

2. Procédé selon la revendication 1, caractérisé en ce que, pour préparer le constituant (a) dans la première étape de réaction, on a fait réagir un alcoolate de magnésium de formule $Mg(OR)_2$, dans laquelle les R représentent des restes alkyles identiques ou différents ayant 1 à 6 atomes ee carbone, avec du tétrachlorure de titane dans un hydrocarbure à une température de 50 à 100°C, puis l'on a partiellement séparé les constituants solubles et l'on a soumis le solide ainsi obtenu, dans une seconde étape de réaction, à un traitement thermique de chauffage à une température de 110 à 200°C durant 8 à 100 heures.